# EUROPEAN PATENT APPLICATION

(11) **EP 4 744 945 A1**
(43) Date of publication of application: **20.05.2026**
(21) Application number: 24213540.8
(22) Date of filing: 18.11.2024
(51) Int. Cl.: B60L 53/14, B60L 53/51, B60L 53/63, H02J 3/32

(54) **ENERGY MANAGEMENT SYSTEM FOR SUPPLYING ELECTRICAL ENERGY TO A LIGHTING SYSTEM BY USING AN ELECTRIC VEHICLE AND A METHOD THEREOF**

(71) Applicant: Tridonic GmbH & Co. KG, 6851 Dornbirn (AT)
(72) Inventor: Schmölzer, Andreas, 6851 Dornbirn (AT); Carracedo Cordovilla, Luis Javier, 6851 Dornbirn (AT); Rohner, Hugo, 6851 Dornbirn (AT)
(74) Representative: Beder, Jens

(57) **Abstract**

The invention is related to energy management system for supply of electrical energy to a lighting system (4), comprising a terminal (14) for electrically connecting a mains network (2), a terminal (15) for electrically connecting at least one electric vehicle (3) and a terminal (16) for electrically connecting the lighting system (4). Moreover, the energy management system (1) comprises a control module (11) that is configured to control an electrical energy distribution between the terminals, based on first information that indicates available electrical energy of the at least one electric vehicle (3) and second information that indicates demanded electrical energy of the lighting system (4). Furthermore, the invention relates to a corresponding method controlling energy distribution.

## Description

The invention relates to an energy management system for supplying electrical energy to a lighting system, wherein the energy management system is capable of receiving electrical energy from a connected electric vehicle, and a method for controlling energy management.

The electrical energy consumption states an ever-increasing behavior. In particular, inside modern environments, a majority of consumers of electric energy are connected an electric network. This leads to an enormous strain on the electricity grid. At times, the electric energy demand reaches peak values that may cause malfunction of the mains network. Thus, the stability of the mains network may be decreased. Furthermore, obtaining electric energy during energy peak times leads to high energy costs.

Although part of the electric consumers comprise an electric storage, the possibility of an efficient electric energy exchange is often ignored. The mains network is usually used as the only source for electric energy, rendering the available electric energy sources unused. For instance, at least partly charged electric vehicles may be used in order to support the provision of demanded electrical energy. Moreover, the mere usage of the mains network as an energy source usually states a non-sustainable strategy.

A general way of mitigating the aforementioned problems is to provide a dedicated energy buffer within a controllable energy management system, which supports the mains network in certain cases. WO 2017/021488 A1 discloses a system of this kind, wherein an energy buffer is used to store energy from the mains network and a controller initiates the discharge of the energy buffer in order to support the mains network in case the electric energy provided by the mains network is not sufficient to achieve the required energy for charging of electric vehicles.

Another way of mitigating the aforementioned problems is to provide additional electric energy sources, which are completely decoupled from the mains network. Such a solution is exemplarily provided by photovoltaic systems that can either support the mains network or that can provide electrical energy independently from the mains network.

However, the previously mentioned known solutions provide a couple of disadvantages. Energy buffering devices require a lot of space and are an additional entity that does not form a part of the general electric vehicle charging system. Moreover, the energy buffer merely supports the mains network in case the mains network may not provide the required energy for the electric vehicle charging system. Hence, a precautionary relief of the main network's strain is not achieved.

Apart from the already mentioned disadvantages, additional and independent electric energy sources are either highly volatile electric energy providers or they require the installation of an internal energy buffer, which is again an additional entity. For instance, the photovoltaic system must provide an energy buffer in order to support the mains network during darkness.

In order to overcome the above mentioned objective technical problems, this application provides an energy management for supply of electrical energy to a lighting system and a method thereof according to the enclosed independent claims. The invention is defined in the appended claims. Advantageous features of the present invention are defined in the corresponding subclaims.

The energy management system for supplying electrical energy to a lighting system comprises a terminal for electrically connecting a mains network, a terminal for electrically connecting at least one electric vehicle and a terminal for electrically connecting the lighting system. Additionally, the energy management system comprises a control module that is configured to control an electrical energy distribution between the terminals, based on first information that indicates available electrical energy of the at least one electric vehicle and second information that indicates demanded electrical energy of the lighting system.

A terminal can be any form of an electrical connector allowing to access to an internal circuit of the energy management system. In particular, the terminal is not required to be a standardized terminal such as a socket plug.

The mains network may is a representative for any electrical network that is able to supply common electrical consumers. It typically operates at standard voltages, such as 120V or 230V and supplies alternating current electricity from power stations towards the electrical consumers.

The lighting system may particularly, yet not exhaustively, comprise luminaires, sensors, communication modules, controllable switches, dimmers as well as any of the commonly known components that are required to operate the mentioned components. Furthermore, the lighting system may comprise means with respect to housing, mounting, light source, circuit safety mechanisms or the circuit itself.

In general, the electrical energy is stored in an electric field accompanied by an electric current and electric voltage. Thus, for each terminal, incoming and outgoing electrical energy may be defined by knowledge of the electrical current and voltage. The term "incoming" describes a flow of energy that flows into the energy management system with respect to the respective terminal. Vice versa the term "outgoing" describes a flow of energy that flows out of the energy management system with respect to the respective terminal. Consequently, the energy distribution represents the incoming and/or outgoing and/or net energy at the terminals. Commonly, the information of energy is provided in the form of power by indicating a power value in watts. This is, the term power and energy are understood to have a similar meaning since power describes energy over time. Hence, the energy demand and the availability of energy may both be described in values of watts. It should be noted that the terms "electrical energy" and "energy" are supposed to have the same meaning throughout the entire application unless otherwise specified.

The control module may particularly be realized on as a Central Processing Unit (CPU), a Graphics Processing Unit (GPU), a Field Programmable Gate Array (FPGA), an Application-Specific Integrated Circuit (ASIC), a Digital Signal Processor (DSP) or a Microcontroller (MCU). The control module may provide control signals for controlling the electrical energy distribution, which is the amount and direction of an electrical energy flow over the respective interface. The energy management system may optionally provide sub circuits that can be controllably connected to the terminals and/or that can be controllably be interconnected, for instance through controllable switches, to each other such that the desired energy distribution may be achieved. Alternatively, the control module exhibits external control to adapt the incoming energy such that the desired energy distribution may be achieved.

An advantageous effect of the foregoing embodiment is that an energy management system allows to exchange energy between a mains network, a lighting system and at least one electric vehicle. In particular, this is advantageous, since the lighting system's demand of energy and the electric vehicle's availability are highly correlated. For instance, in the evening or early morning, the demand of light is high when compared to the rest of the day. However, that is usually the period of time when people are charging their electric vehicle although the electric vehicle is already partly charged, meaning the electric vehicles may be used as an electric energy source. Moreover, an advantageous effect is given by the fact that the distribution of energy between the terminals is based on available energy (of the electric vehicle) and demand of the devices not part of the mains network, meaning the intrinsic potential for energy exchange is considered irrelevant of the available energy of the mains network. Thus, the strain on the mains network is relieved. Moreover, the stability of the mains network is increased.

An embodiment of the energy management system for supply of electrical energy to a lighting system further comprises a terminal for electrically connecting a photovoltaic system.

An advantageous effect of the foregoing embodiment is that a photovoltaic system can also be connected to the energy management system. Hence, the photovoltaic system can provide additional electrical energy to the system.

An embodiment of the energy management system for supplying electrical energy to a lighting system further comprises an energy distribution module that is configured to be electrically connected to each of the terminals. Moreover, the energy distribution module is configured to enable a controllable electrical connection between the terminals. Furthermore, the control module is further configured to control the energy distribution module to distribute a received electrical energy towards the terminals.

The energy distribution module comprises at least one subcircuit that can be controllably connected to the terminals and/or a plurality of subcircuits that can be controllably be interconnected through controllable switches to each other. For instance, a transistor, a resistor or an amplifier may realize the subcircuit. Moreover, a plurality of such interconnected subcircuits may realize the energy distribution module. Each subcircuit may amplify, reduce or conserve an energy incoming to the subcircuit. It should therefore be noted that the distribution of the received energy in no way presupposes that the distributed energy is equal to the received energy.

An advantageous effect of the foregoing embodiment is that incoming electric energy may be controllably distributed to the connected terminals internally via the energy distribution module. Thus, the necessity of an additional communication between the control module and the connected devices at the terminal for control of the electrical energy distribution can be avoided.

An embodiment of the energy management system for supplying electrical energy to a lighting system further comprises the control module that is further configured to control the energy distribution module to distribute the received electrical energy towards the at least one electric vehicle and/or lighting system, based on the first information and the second information.

It should be noted that distributing the energy to the respective devices implicitly means that a physical connection may be realized that allows the energy to be distributed towards said devices in case the devices are connected to the energy management system via the respective terminals.

An advantageous effect of the foregoing embodiment is that the received electric energy is internally made available to the at least one electric vehicle and/or lighting system.

An embodiment of the energy management system for supplying electrical energy to a lighting system further comprises the control module that is further configured to control the energy distribution module such that the lighting system is supplied either solely by electrical energy directly provided by the mains network or at least partly by electrical energy provided by the at least one electric vehicle, based on first information and the second information.

Advantageously, the first information indicates available electrical energy for each of the at least one electric vehicle connected to the interface(s) of the energy management system. Thus, for partly supporting the lighting system with energy, electric vehicles are chosen that may provide enough energy. In particular, a threshold value for the energy may be computed based on the second information. Hence, merely the electric vehicles for which the first information indicates that the state of charge exceeds said threshold are chosen for at least partly supplying the lighting system.

Alternatively or additionally, the first information indicates the sum of available energy of each of the at least one electric vehicle. Thus, a second threshold value for the energy may be computed based on the second information. Hence, the available energy of every electric vehicle is used for at least partly supplying the lighting system in case the first information exceeds the second threshold.

Alternatively, the first information indicates the sum of available energy of each of the electric vehicles that provide energy that exceeds the first threshold. Thus, a third threshold value for the energy may be computed based on the second information. Hence, the available energy of every vehicle that is part of the sum is used for at least partly supplying the lighting system in case the first information exceeds the third threshold.

The aforementioned definitions of the first information are valid for the entire description of the present invention.

An advantageous effect of the foregoing embodiment is that the energy supply for the lighting system can be supported by the electrical energy made available by the at least one electric vehicle. Thus, the strain on the mains network is relieved. Moreover, the stability of the mains network is increased as the support of the electrical energy provided by the electric vehicle is dependent on the demand of energy of the lighting system as well as the available energy of the electric vehicles.

An embodiment of the energy management system for supplying electrical energy to a lighting system further comprises the control module that is further configured to control the energy distribution module such that the lighting system is supplied solely by electrical energy directly provided by the mains network. Alternatively, the control module is further configured to control the energy distribution module such that the lighting system is supplied at least partly by electrical energy provided by the at least one electric vehicle and/or at least partly by electrical energy provided by the photovoltaic system, based on first, second and third information. The third information indicates the available electric energy of the photovoltaic system. Additionally or alternatively, the control module is configured to control the energy distribution module such that the at least one electric vehicle is supplied either solely by electrical energy directly provided by the mains network or at least partly by electrical energy provided by the photovoltaic system, based on third and fourth information. The fourth information indicates the demanded electrical energy of the at least one electric vehicle.

Using electrical energy provided by the at least one electric vehicle and/or electrical energy provided by the photovoltaic system for at least partly powering the lighting system is based on first, second and third information. Preferably, the lighting system is at least partly supplied, when the available energy by the at least one electric vehicle and/or by the photovoltaic system exceeds a threshold that is computed based on the second information. The threshold shall define a lower bound for the available energy. The threshold may be separately computed for the at least one electric vehicle and the photovoltaic system. Hence, the threshold concerning the at least one electric vehicle may be computed as previously described for the first, second and third threshold. Alternatively or additionally, the threshold may be computed for the at least one electric vehicle and the photovoltaic system.

Similarly, a threshold may be computed based on fourth information when using electrical energy provided by the photovoltaic system and/or electrical energy provided by the mains network. However, now the threshold yields a lower boundary for the available energy of the photovoltaic system and/or the mains network.

An advantageous effect of the foregoing embodiment is that the energy supply of the lighting system can be supported by the electrical energy made available by the at least one electric vehicle and/or the photovoltaic system. Moreover, an advantageous effect of the foregoing is that the energy supply of the at least one electric vehicle can be supported by the electrical energy made available by the photovoltaic system. Thus, the strain on the mains network is relieved. Moreover, the stability of the mains network is improved as the support of the electrical energy provided by the electric vehicle and/or photovoltaic system is dependent on the demand of energy of the lighting system as well as the available energy of the electric vehicles and photovoltaic system.

An embodiment of the energy management system for supplying electrical energy to a lighting system further comprises a charging system for at least one electric vehicle. The charging system is configured to electrically connect the energy distribution module with the terminal for electrically connecting the at least one electric vehicle, to charge or discharge the corresponding electric vehicle.

The charging system may comprise common components to enable the functionality of a charging station. In particular, the charging system must enable bidirectional energy transfer, such that energy from the at least one electric vehicle can be transferred towards the energy distribution module. Moreover, the energy management system may be integrated into the housing of a common bidirectional charging station.

An advantageous effect of the foregoing embodiment is that the charging system can be directly used to provide or retrieve electrical energy to/from the at least one electrical vehicle. Furthermore, as the charging system is directly connected to the energy distribution module, the retrieved energy can be directly made available for distribution with the energy distribution module.

An embodiment of the energy management system for supplying electrical energy to a lighting system further comprises a control module that is further configured to control the charging system to charge or discharge the corresponding electric vehicle.

An advantageous effect of the foregoing embodiment is that the control module can be used for controlling the charging system.

An embodiment of the energy management system for supply of electrical energy to a lighting system further comprises a monitoring module that is configured to monitor at least one of the first, second, third or fourth information.

The monitoring module may be any electrical component that enables the measurement of electrical power. In particular, the electrical power may be obtained by the knowledge of electrical current and/or voltage and/or resistance. Hence, the demand and availability of an energy can be directly obtained by measuring said values at the terminals.

An advantageous effect of the foregoing embodiment is that the energy management system is able to internally monitor the first, second, third or fourth information.

An embodiment of the energy management system for supplying electrical energy to a lighting system further comprises a communication module that is configured to receive at least one of the first, second, third or fourth information.

The communication module may be any communication module configured to provide common wired and/or wireless communication by usage of the respective protocols.

An advantageous effect of the foregoing embodiment is that the energy management system can obtain the required information by external communication.

An embodiment of a method for energy management for supplying electrical energy to a lighting system, comprising the steps of gathering a first and second information, wherein the first information indicates available electrical energy of at least one electric vehicle and the second information indicates demanded electrical energy of a lighting system. Additionally, the method further comprises the steps of controlling an electrical energy distribution between a terminal for electrically connecting a mains network and a terminal for electrically connecting the at least one electric vehicle and a terminal for connecting the lighting system, based on the first information and the second information.

An embodiment of a method for energy management for supplying electrical energy to a lighting system is further configured such that the step of controlling the electrical energy distribution is further configured such that a received electrical energy is distributed towards the at least one electric vehicle and/or the lighting system, based on the first information and the second information.

An embodiment of a method for energy management for supplying electrical energy to a lighting system is further configured such that the step of controlling the electrical energy distribution is further configured, such that the lighting system is supplied either solely by electrical energy directly provided by the mains network or at least partly by electrical energy provided by the at least one electric vehicle, based on the first information and the second information.

An embodiment of a method for energy management for supplying electrical energy to a lighting system further comprises the steps of gathering a third and fourth information, wherein the third information indicates the available electric energy of the photovoltaic system and the fourth information indicates the demanded electrical energy of the at least one electric vehicle. In particular, the step of controlling the electrical energy distribution is further configured, such that the lighting system is supplied either solely by electrical energy directly provided by the mains network or at least partly by electrical energy provided by the at least one electric vehicle and/or at least partly by electrical energy provided by a photovoltaic system, based on the first information and the second information and the third information. Additionally or alternatively, the step of controlling the electrical energy distribution is further configured, such that the at least one electric vehicle is supplied either solely by electrical energy directly provided by the mains network or at least partly by electrical energy provided by the photovoltaic system, based on the third information and the fourth information.

The advantageous effects of the embodiments of aforementioned methods can be obtained from the corresponding embodiments of the system.

In the following, preferred embodiments of the present application shall be described in more detail based on the corresponding figures.
Figure 1 is a schematic view of an energy management system embedded in a network with a mains network, an electric vehicle, a photovoltaic system and a lighting system.
Figure 2 is a schematic view of an alternative configuration of the network shown in Fig. 1.
Figure 3 is a flowchart of a first method for energy management.
Figure 4 is a flowchart of a second method for energy management.
Figure 5 is a flowchart of a third method for energy management.
Figure 6 is a flowchart of a third method for energy management.

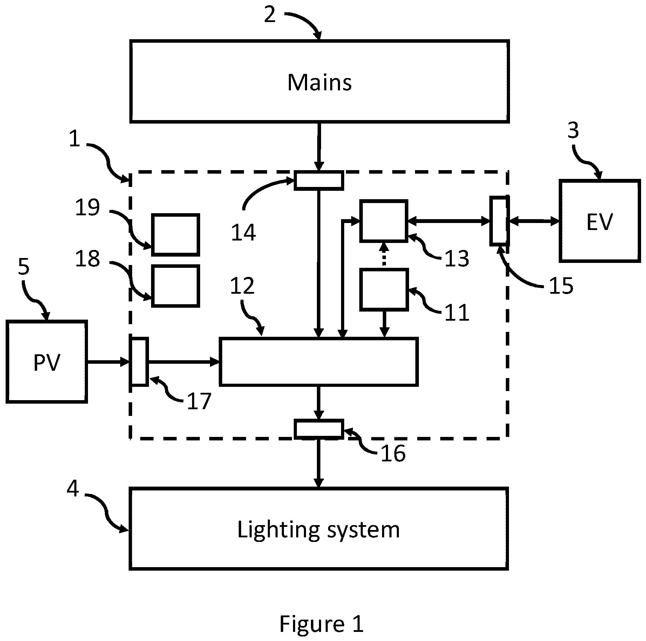

Figure 1 is a schematic view of an energy management system 1 embedded in a network with a mains network 2, an electric vehicle 3, a lighting system 4 and a photovoltaic system 4. The energy management system comprises a control module 1, an energy distribution module 12, a charging system 13, a terminal 14 for electrically connecting the mains network 2, a terminal 15 for electrically connecting the electric vehicle 3, a terminal 16 for electrically connecting the lighting system 4, a terminal 17 for electrically connecting the photovoltaic system 5, a monitoring module 19 and a communication module 18. Furthermore, the energy management system comprises common means for an electric circuit, in particular means for providing enough power to each of the aforementioned devices as well as means with respect to the housing, mounting, circuit safety mechanisms and the circuit itself.

Apart from the arrows connected to the control module 11, the direction of the arrows indicate the possible energy flow. The arrows connected to the control module 11 indicate the direction of the control signal flow.

The control module 1 may particularly be realized as a Central Processing Unit (CPU), a Graphics Processing Unit (GPU), a Field Programmable Gate Array (FPGA), an Application-Specific Integrated Circuit (ASIC), a Digital Signal Processor (DSP) or a Microcontroller (MCU). The control module 1 provides control signals for controlling the electrical energy distribution. In particular, the control module 1 controls the energy distribution module 12 and optionally the charging system 13. The terminals for electrically connecting the control module 1 to a power supply like the means network 2 are not depicted herein.

The energy distribution module 12 comprises a plurality of interconnectable transistors. Each transistor may amplify, reduce or conserve an energy incoming to the transistor. The transistor may be realized by any of the type of bipolar transistors and/or field-effect transistors, etc. Furthermore, the energy distribution module 12 is electrically connected to the terminals 14, 15 and 17 as well as to the charging system 13 and to the control module 11. Each electrical connection may be adapted to the connected device to allow an energy transfer and/or a communication of control signals.

The charging system 13 is a circuit required for bidirectional charging of the electric vehicle 3. Moreover, the charging system 13 is electrically connected to the energy distribution module 12 and to the terminal 15 to enable energy transfer and/or a communication of signals.

The monitoring module 19 is a current and/or voltage measurement module. For each terminal 14, 15, 16 and 17 the monitoring module 19 is placed such that the transferred power over the terminal may be determined. Power that is determined to be incoming with respect to a terminal 14, 15, 16 or 17 can be referred to as available power or energy. Contrary, power that is determined to be outgoing can be referred to as demanded power or energy. The monitoring module 19 is internally connected to the control module 11 to provide information of the measurements, which is not depicted herein.

The communication module 18 is a wireless communication module. Information may be added to a signal by common modulation techniques, in particular by Pulse Position Modulation (PPM), Pulse Amplitude Modulation (PAM), Binary Phase Shift Keying (BPSK), Quadrature Phase Shift Keying (QPSK), Quadrature Amplitude Modulation (QAM), Frequency Shift Keying (FSK). For reasons of efficiency, the signal may be encoded by common encoding techniques, in particular by Linear Block Codes, Convolutional Codes, Turbo Codes, Low Density Parity Check Codes, LT and Raptor Codes, Polar Codes or Space-Time Coding. In particular, the communication module may be a Bluetooth, a Wi-Fi or a UWB module. The communication module 18 is internally connected to the control module 11 to provide information of the measurements, which is not depicted herein.

The mains network 2 is electrically connected to the terminal 14 for power transfer from mains network 2 towards the energy distribution module 14. The electric vehicle 3 is electrically connected to the charging system 13 via the terminal 15 for bidirectional power transfer and optionally for information transfer. The photovoltaic system 5 is electrically connected to the terminal 17 for power transfer to the energy distribution module 12. The lighting system 4 is electrically connected to the terminal 16 for power transfer and optionally information transfer to the energy distribution module 12.

The terminals 14, 15, 16 or 17 enable power transfer and optionally, information transfer. In particular, they may be bidirectional for both cases.

Mainly, the lighting system 4 and the electric vehicle 3 are supplied by energy provided by the mains network 2. This is, the mains network 2 transfers energy to the energy distribution module 12, whereas the control module 11 controls the energy distribution module 12 such that the energy from the mains network 2 is distributed to the terminals 15 and 16. With regard to the terminal 15, the energy is transferred over the charging system 13 that is connected in between the energy distribution module 12 and the terminal 15 in order to charge the electric vehicle 3.

However, the monitoring module 19 and/or the communication module 18 provide information on the power distribution over each terminal 14, 15, 16 or 17. In particular, the available power is measured at the terminals 14, 15 and 17. In addition, the demanded power is measured at the terminals 15 and 16. Then, the power distribution information is provided to the control module 11 based on which the first, second, third and fourth information is derived.

The first information indicates available electrical energy of the electric vehicle 3. Moreover, a threshold value for the energy may be computed based on the second information that indicates the demanded energy of the lighting system 4. In case the available electrical energy of the electric vehicle 3 exceeds this threshold, the control module 11 is configured to control the energy distribution module 12 such that the lighting system 4 is supplied at least partly by available electric energy of the electric vehicle 3. In other words, this means that the lighting system is either solely supplied by energy from the electric vehicle 3 or a combination of the energy provided by the mains network 2 and the electric vehicle 3.

Alternatively or additionally, the similar evaluation may be performed for considering whether the power available from the photovoltaic system 5 shall be at least partly used for supplying the lighting system 4. Thus, the threshold evaluation is applied on the available energy of the photovoltaic system 5. The third information indicates the available energy of the photovoltaic system 5.

Alternatively or additionally, the similar evaluation may be performed for considering whether the power available from the photovoltaic system 5 shall be at least partly used for supplying the electric vehicle 3. Therefore, the threshold is computed based on fourth information that indicates the available energy of the photovoltaic system 5. Hence, the threshold evaluation is applied on the available energy of the photovoltaic system 5.

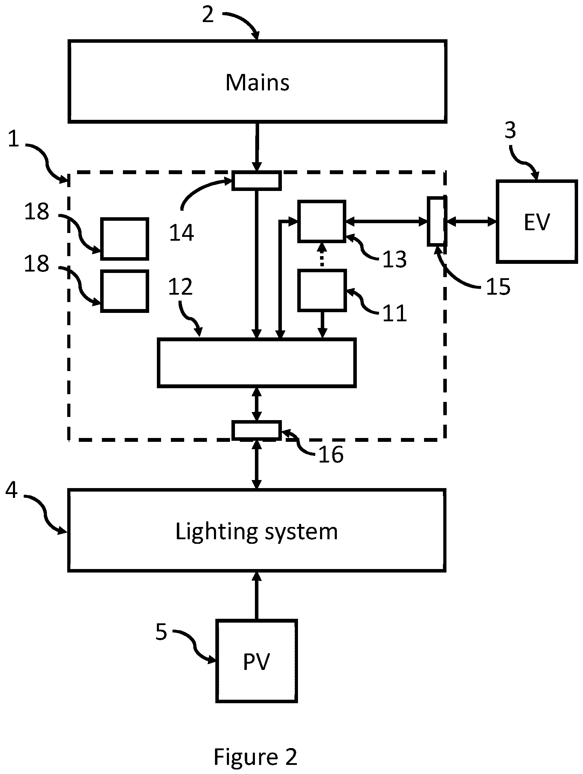

Figure 2 is a schematic view of an alternative configuration of the network shown in Fig. 1 comprising the energy management system 1. The functionality of the embodiment, as previously described for Figure 1, is fully incorporated by the embodiment in Figure 2. To avoid redundancy, it is referred to the previous description of the functionality of the embodiment shown in Figure 1. However, additional or different technical features are described below.

The photovoltaic system 5 of Figure 2 is connected to the energy management system 1 over the lighting system 16. However, as the terminals 14, 15, 16 and 17 are in general supposed to enable bidirectional energy transfer, this network is not any different from that in Figure 1, except that the lighting system 4 and the photovoltaic system 5 share the terminal 16.

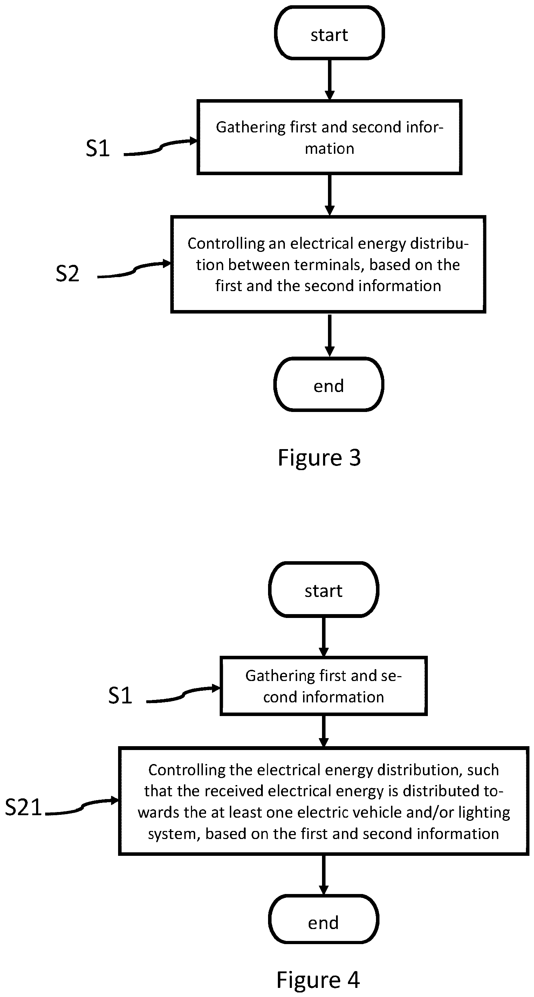

Figure 3 is a flowchart of a first method for energy management. This energy management may be performed by the energy management system 1.

The step S1 comprises the step of gathering a first and second information, by the monitoring module 19 and/or the communication module 18. The first information indicates available electrical energy of the at least one electric vehicle 3 and the second information indicates demanded electrical energy of the lighting system 4.

The step S2 comprise the step of controlling an electrical energy distribution, by the control module 11, between the terminal 14 for electrically connecting the mains network 2 and the terminal 15 for electrically connecting the at least one electric vehicle 3 and the terminal 16 for connecting the lighting system 4, based on the first information and the second information.

Figure 4 is a flowchart of a second method for energy management. The second method shares the same step S1 with the first method, such that a repetitive description of step S1 is omitted.

The step S21 comprises the step of controlling, by the control module 11, the electrical energy distribution, via the energy distribution module 12, such that a received electrical energy is distributed towards the at least one electric vehicle 3 and/or lighting system 4, based on the first information and the second information.

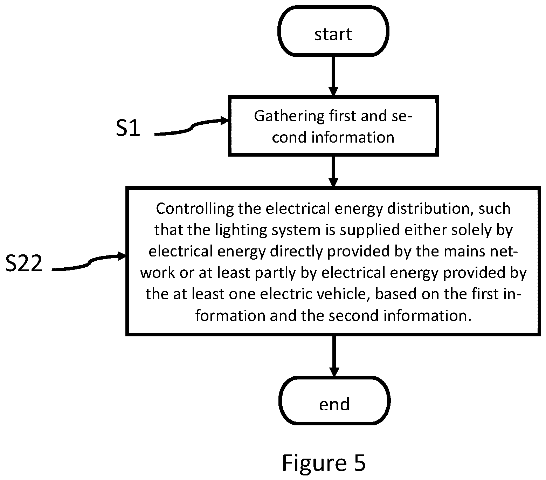

Figure 5 is a flowchart of a third method for energy management. The third method shares the same step S1 with the first method, such that a repetitive description of step S1 is omitted.

The step S22 comprises the step of controlling, by the control module 11, the energy distribution, via the electrical energy distribution module 12, such that the lighting system 4 is supplied either solely by electrical energy directly provided by the mains network 2 or at least partly by electrical energy provided by the at least one electric vehicle 3, based on the first information and the second information.

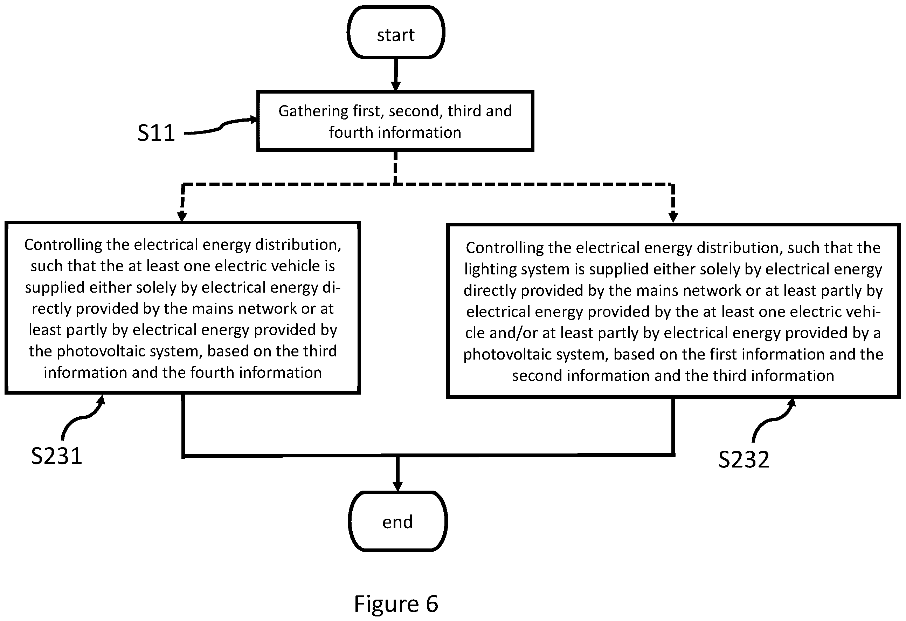

Figure 6 is a flowchart of a fourth method for energy management.

The step S 11 comprises the step of gathering first, second, third and fourht information, by the monitoring module 19 and/or the communication module 18. The first information indicates available electrical energy of the at least one electric vehicle 3 and the second information indicates demanded electrical energy of the lighting system 4. The third information indicates the available electric energy of the photovoltaic system 5 and the fourth information indicates the demanded electrical energy of the at least one electric vehicle 3.

The step S231 comprises the step of controlling, by the control module 11, the energy distribution, via the electrical energy distribution module 12, such that the lighting system 4 is supplied either solely by electrical energy directly provided by the mains network 2 or at least partly by electrical energy provided by the at least one electric vehicle 3 and/or at least partly by electrical energy provided by a photovoltaic system 5, based on the first information and the second information and the third information.

Alternatively or additionally, the step S232 comprises the step of controlling, by the control module 11, the energy distribution, via the electrical energy distribution module 12, such that the at least one electric vehicle 3 is supplied either solely by electrical energy directly provided by the mains network 2 or at least partly by electrical energy provided by the photovoltaic system 5, based on the third information and the fourth information.

## Claims

1. Energy management system (1) for supplying electrical energy to a lighting system (4), comprising:
a terminal (14) for electrically connecting a mains network (2); and
a terminal (15) for electrically connecting at least one electric vehicle (3); and
a terminal (16) for electrically connecting the lighting system (4); and
a control module (11) that is configured to control an electrical energy distribution between the terminals (14, 15, 16), based on first information that indicates available electrical energy of the at least one electric vehicle (3) and second information that indicates demanded electrical energy of the lighting system (4).

2. Energy management system (1) according to claim 1, further comprising:
a terminal (17) for electrically connecting a photovoltaic system (5).

3. Energy management system (1) according to any of the previous claims, further comprising:
an energy distribution module (12) that is configured to be electrically connected to each of the terminals (14, 15, 16, 17); and to provide a controllable electrical connection between the terminals (14, 15, 16, 17); wherein
the control module (11) is further configured to control the energy distribution module (12) to distribute a received electrical energy towards the terminals (14, 15, 16, 17).

4. Energy management system (1) according to any of the previous claims, wherein
the control module (11) is further configured to control the energy distribution module (12) to distribute the received electrical energy towards the at least one electric vehicle (3) and/or lighting system (4), based on the first information and the second information.

5. Energy management system (1) according to any of the previous claims, wherein
the control module (11) is further configured to control the energy distribution module (12) such that the lighting system (4) is supplied either solely by electrical energy directly provided by the mains network (2) or at least partly by electrical energy provided by the at least one electric vehicle (3), based on the first information and the second information.

6. Energy management system (1) according to any of the previous claims 2 to 5, wherein
the control module (11) is further configured to control the energy distribution module (12) such that the lighting system (4) is supplied either solely by electrical energy provided by the mains network (2) or at least partly by electrical energy provided by the at least one electric vehicle (3) and/or at least partly by electrical energy provided by the photovoltaic system (5), based on the first information and the second information and third information that indicates the available electric energy of the photovoltaic system (5); and/or
the control module (11) is further configured to control the energy distribution module (12) such that the at least one electric vehicle (3) is supplied either solely by electrical energy directly provided by the mains network (2) or at least partly by electrical energy provided by the photovoltaic system (5), based on the third information and fourth information that indicates the demanded electrical energy of the at least one electric vehicle (3).

7. Energy management system (1) according to any of the previous claims, further comprising:
a charging system (13) for at least one electric vehicle (3), wherein
the charging system (13) is configured to
electrically connect the energy distribution module (12) with the terminal (15) for electrically connecting the at least one electric vehicle (3), to charge or discharge the corresponding electric vehicle (3).

8. Energy management system (1) according to any of the previous claims, wherein
the control module (11) is further configured to control the charging system (13) to charge or discharge the corresponding electric vehicle (3).

9. Energy management system (1) according to any of the previous claims, further comprising:
a monitoring module (19) that is configured to monitor at least one of the first, second, third or fourth information.

10. Energy management system (1) according to any of the previous claims, further comprising:
a communication module (18) that is configured to receive at least one of the first, second, third or fourth information.

11. A method for energy management for supply of electrical energy to a lighting system (4), comprising the steps of:
gathering (S1) first and second information, wherein the first information indicates available electrical energy of at least one electric vehicle (3) and the second information indicates demanded electrical energy of a lighting system (4); and
controlling (S2) an electrical energy distribution between a terminal (14) for electrically connecting a mains network (2) and a terminal (15) for electrically connecting the at least one electric vehicle (3) and a terminal (16) for connecting the lighting system (4), based on the first information and the second information.

12. A method according to claim 11, wherein the step of controlling (S21) the electrical energy distribution is further configured,
such that a received electrical energy is distributed towards the at least one electric vehicle (3) and/or lighting system (4), based on the first information and the second information.

13. A method according to any of the claims 11 or 12, wherein the step of controlling (S22) the electrical energy distribution is further configured, such that
the lighting system (4) is supplied either solely by electrical energy directly provided by the mains network (2) or at least partly by electrical energy provided by the at least one electric vehicle (3), based on the first information and the second information.

14. A method according to any of the claims 11 to 13, further comprising the steps of:
gathering (S11) third and fourth information, wherein the third information indicates the available electric energy of the photovoltaic system (5) and the fourth information indicates the demanded electrical energy of the at least one electric vehicle (3); wherein
the step of controlling (S231, S232) the electrical energy distribution is further configured, such that
the lighting system (4) is supplied either solely by electrical energy directly provided by the mains network (2) or at least partly by electrical energy provided by the at least one electric vehicle (3) and/or at least partly by electrical energy provided by a photovoltaic system (5), based on the first information and the second information and the third information, and/or
the at least one electric vehicle (3) is supplied either solely by electrical energy directly provided by the mains network (2) or at least partly by electrical energy provided by the photovoltaic system (5), based on the third information and the fourth information.
